# EUROPÄISCHE PATENTSCHRIFT

(11) **EP 1 002 963 B1**
(45) Veröffentlichungstag und Bekanntmachung des Hinweises auf die Patenterteilung: **12.12.2001**
(21) Anmeldenummer: 98811133.2
(22) Anmeldetag: 13.11.1998
(51) Int. Cl.: F16C 29/04, F16C 33/52

(54) **Rollenkäfig für eine wälzgelagerte Längsführung**
Roller cage for a longitudinal rolling bearing guide
Cage à rouleaux pour guidage longitudinal à roulements

(43) Veröffentlichungstag der Anmeldung: 24.05.2000
(73) Patentinhaber: Agathon A.G. Maschinenfabrik, CH-4500 Solothurn (CH)
(72) Erfinder: Graber, Martin, 3294 Büren a.A. (CH)
(74) Vertreter: BOVARD AG - Patentanwälte

(56) Entgegenhaltungen:
- EP-A- 0 795 694
- US-A- 3 582 161
- US-A- 4 429 922
- US-A- 4 664 534
- US-A- 5 716 140

## Beschreibung

Die vorliegende Erfindung bezieht sich auf einen Rollenkäfig für eine wälzgelagerte Längsführung gemäss dem Oberbegriff des Patentanspruchs 1.

Derartige Rollenkäfige sind bekannt. Üblicherweise werden bei derartigen Rollenkäfigen die Öffnungen für die Aufnahme der Rollen durch Stanzen erhalten. Danach werden die Rollen in die entsprechenden Öffnungen eingesetzt, wonach das Material des Rollenkäfigs im Bereich des innenseitigen und aussenseitigen Randes durch Eindrücken plastisch verformt wird, so dass ein vorstehender Rand gebildet wird, wodurch die Rollen in der Öffnung gehalten werden.

Durch den Ausstanzvorgang zur Herstellung der Öffnungen weisen die Seitenflächen, die die Öffnungen begrenzen, eine gewisse Rauheit auf. Durch diese Seitenflächen sind die Rollen geführt. Dies bedeutet, dass die Rollen beim Bewegen des führenden Teils bezüglich des geführten Teils mit diesen Seitenflächen in Kontakt kommen. Durch die Oberflächenrauheit der Seitenflächen sind somit die Rollen einer abrasiven Abnützung ausgesetzt, sowohl auf der Rollfläche als auch auf den Stirnflächen. Dies beeinträchtigt die Lebensdauer der Rollen und somit der entsprechenden Längsführung.

Das Anbringen der Öffnungen in den Rollenkäfigen durch Stanzen und das Verstemmen der innenliegenden und aussenliegenden Randbereiche der Öffnungen nach dem Einsetzen der Rollen benötigt mehrere Arbeitsgänge. Dadurch können Ungenauigkeiten auftreten, die eine ungenaue Lage der Rollen zur Folge haben kann. Dies führt dazu, dass die Rolle nicht exakt auf den zu tragenden Flächen abrollt, wodurch auch hier der Verschleiss grösser wird, was wiederum einen Einfluss auf die Lebensdauer derartiger Längsführungen hat. Durch ungenaue Lagen der Rollen in den Öffnungen wird auch der Druck der Rollenflächen auf die Seitenflächen der Öffnungen grösser, was wiederum einen schnelleren Verschleiss der Rolle zur Folge hat.

Aus der US 3 582 161 A ist ein Rollenkäfig mit darin eingesetzten Rollen bekannt, bei welchem der tragende Bereich der Rollen in Kontakt kommt mit den die Rollen in den Öffnungen haltenden Randbereichen des Rollenkäfigs, wodurch auch hier der Verschleiss erhöht wird.

Die Aufgabe der vorliegenden Erfindung besteht nun darin, die Öffnungen im Rollenkäfig so zu gestalten, dass eine genauere Lage der darin eingesetzten Rollen erreicht wird, wodurch der Verschleiss der Rollen und des Rollenkäfigs reduziert und die Lebensdauer von entsprechend ausgestatteten Längsführungen erhöht wird.

Erfindungsgemäss erfolgt die Lösung dieser Aufgabe durch die im Anspruch 1 aufgeführten Merkmale.

Die vier Eckbereiche der durch die vier Seitenflächen gebildeten Öffnung sind jeweils mit einer Ausnehmung versehen, die im wesentlichen halbzylinderförmig ausgebildet sein können. Dadurch wird erreicht, dass dieser Bereich der Öffnung nicht in Kontakt mit der in die Öffnung eingesetzten Rolle kommen kann, wodurch der Verschleiss der Rolle, insbesondere wenn sie mit zwei bombierten Wälzoberflächen ausgestattet ist, die an den beiden endseitigen Bereichen der Rolle vorgesehen sind, vermindert werden kann.

Bei der Verwendung der obengenannten Rollen ist es von Vorteil, wenn der aussenseitig entlang der beiden Seiten verlaufende vorstehende Rand jeweils seitlich durch die beiden Ausnehmungen begrenzt ist. Dadurch wird ebenfalls vermieden, dass dieser Rand mit dem Abstützbereich der entsprechenden Rolle in Kontakt kommt, wodurch der Verschleiss geringer wird. Dies trifft auch für die kragenförmigen Vorsprünge zu, welche entlang der beiden Seiten vorgesehen sind, die parallel zur Längsachse der Rolle verlaufen, und die ebenfalls seitlich durch die im jeweiligen Eckbereich angebrachte Ausnehmung begrenzt sind.

Wenn in die Öffnungen des Rollenkäfigs Rollen eingesetzt werden, die eine bombierte Oberfläche aufweisen, ist es vorteilhaft, die kragenförmigen Vorsprünge im Bereich der Ausnehmungen anzuordnen, wobei deren Vorderkanten im wesentlichen in diagonaler Richtung über den Eckbereich verlaufen. Dadurch wird erreicht, dass der Abstützbereich dieser Rolle nicht in Kontakt kommt mit den kragenförmigen Vorsprüngen, wodurch der Verschleiss geringer und somit die Lebensdauer erhöht wird.

Ein weiterer Vorteil ergibt sich zusätzlich, wenn im mittleren Bereich der beiden Seiten, welche parallel zur Längsachse der Rolle verlaufen, in der entsprechenden Seitenfläche jeweils eine weitere Ausnehmung angebracht ist. Dadurch wird ein Kontakt der Abstützfläche der Rolle mit diesen beiden Seitenflächen vermieden, zusätzlich wird noch erreicht, dass der vorstehende Bereich ebenfalls eine entsprechende Ausnehmung aufweist.

In vorteilhafter Weise sind die Öffnungen im Rollenkäfig so gestaltet, dass sie vorgebohrt werden und in einem Arbeitsgang durch Fräsen erhalten werden können, wobei nur ein Fräswerkzeug verwendet werden muss. Dadurch wird das Anbringen der Öffnungen im Rollenkäfig vereinfacht, was sich auf die Genauigkeit und die Wirtschaftlichkeit positiv auswirkt.

Ausführungsformen der Erfindung werden nachfolgend anhand der beiliegenden Zeichnung beispielhaft näher erläutert.

Es zeigt
Fig. 1 einen Längsschnitt durch eine Längsführung mit Rollenkäfig und darin eingesetzten Rollen;
Fig. 2 einen Schnitt entlang Linie II-II durch die Längsführung gemäss Fig. 1;
Fig. 3 eine Draufsicht auf einen Ausschnitt einer ersten Ausführungsform eines Rollenkäfigs mit einer Öffnung und darin eingesetzter Rolle;
Fig. 4 eine Schnittdarstellung des Rollenkäfigs entlang Linie IV-IV gemäss der Ausführungsform nach Fig. 3;
Fig. 5 eine Schnittdarstellung des Rollenkäfigs entlang Linie V-V gemäss der Ausführungsform nach Fig. 3;
Fig. 6 eine Draufsicht auf einen Ausschnitt eines weiteren Ausführungsbeispiels eines Rollenkäfigs mit einer Öffnung und darin eingesetzter Rolle;
Fig. 7 eine Schnittdarstellung des Rollenkäfigs entlang Linie VII-VII gemäss der Ausführungsform nach Fig. 6; und
Fig. 8 eine Schnittdarstellung des Rollenkäfigs entlang Linie VIII-VIII gemäss der Ausführungsform nach Fig. 6.

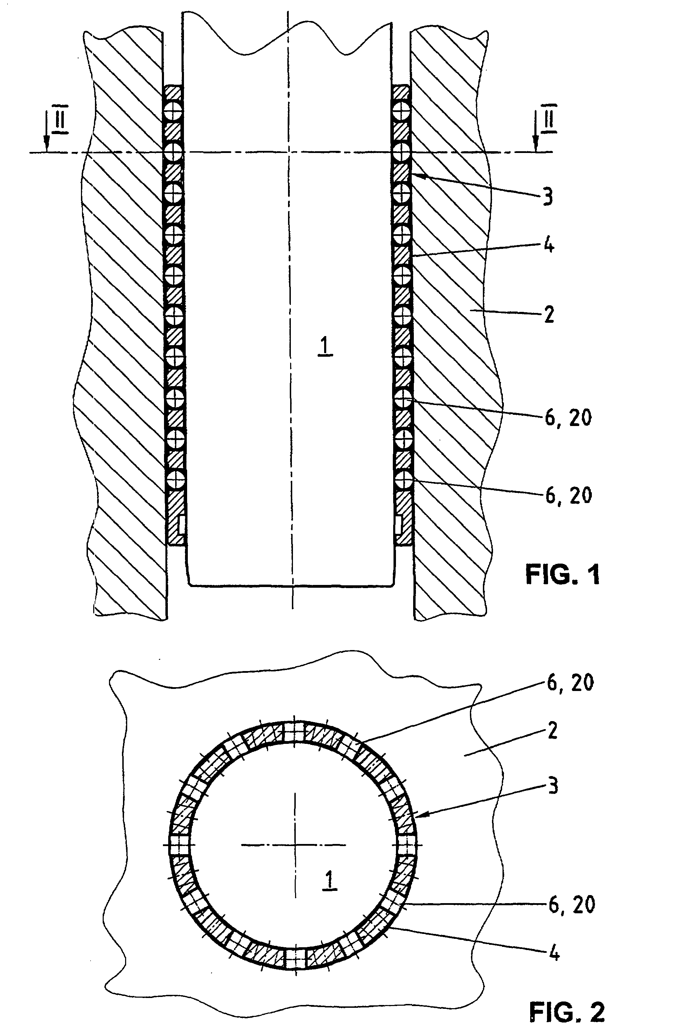

In den Fig. 1 und 2 ist eine Führungssäule 1 als führender Teil und eine Platte 2 als geführter Teil, beispielsweise eines Werkzeuges für den Formenbau ersichtlich, die durch eine Längsführung 3 gegenseitig längsverschiebbar geführt sind. Die Längsführung 3 besteht aus einem Rollenkäfig 4, der mit Öffnungen 5 und darin eingesetzten Rollen 6 versehen ist. Die Öffnungen 5 sind in bekannter Weise im wesentlichen auf Mantellinien des den Rollenkäfig 4 bildenden Hohlzylinders angeordnet, die über den Umfang verteilt sind.

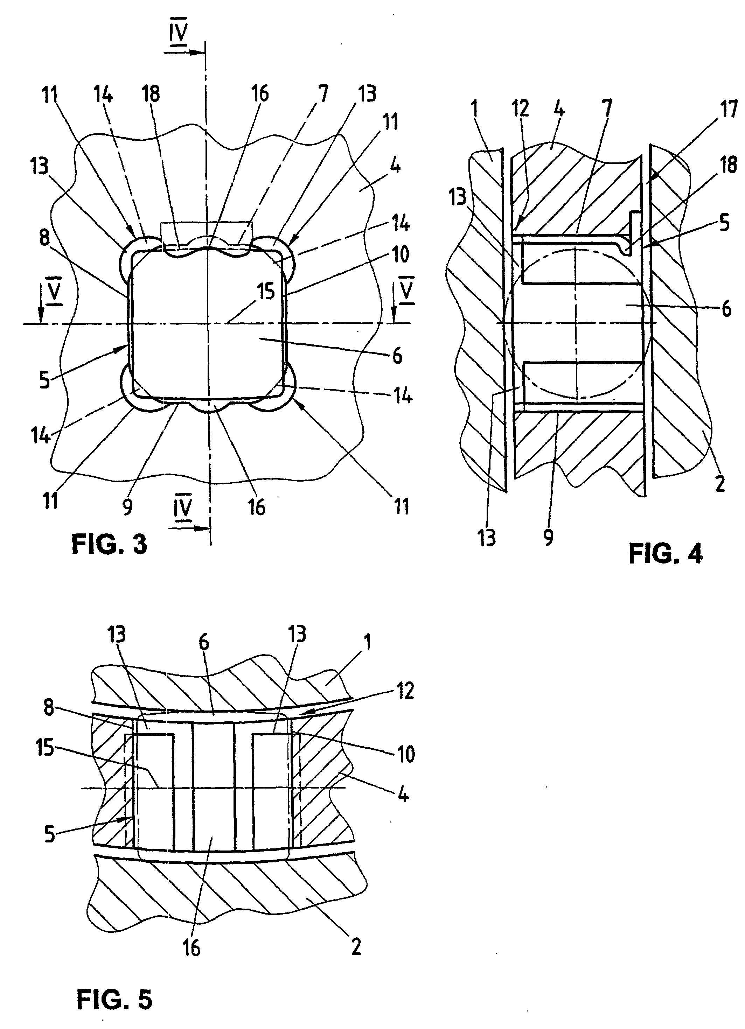

Gemäss einem ersten Ausführungsbeispiel, dargestellt in den Fig. 3 bis 5, weist jede Öffnung 5, die im Rollenkäfig 4 angeordnet sind, einen im wesentlichen rechteckförmigen Querschnitt auf. Dieser rechteckförmige Querschnitt ist durch vier Seitenflächen 7, 8, 9 und 10 gebildet.

In den vier Eckbereichen der durch die vier Seitenflächen 7, 8, 9 und 10 gebildeten Öffnung 5 ist jeweils eine Ausnehmung 11 angebracht. Jede Ausnehmung 11 weist im wesentlichen die Form eines Halbzylinders auf. Am innenseitigen Randbereich 12 der Öffnung 5 sind im Bereich der Ausnehmungen 11 kragenförmige Vorsprünge 13 vorgesehen, deren Vorderkanten 14 im wesentlichen in diagonaler Richtung über den Eckbereich verlaufen. Durch diese kragenförmigen Vorsprünge ist die in die Öffnung 5 eingesetzte Rolle 6 gehalten, damit sie nicht gegen die Innenseite des Rollenkäfigs 4, das heisst in Richtung der Führungssäule 1 aus der Öffnung 5 austreten kann.

An den Seitenflächen 7 und 9, welche parallel zur Längsachse 15 der Rolle 6 verlaufen, ist je eine weitere Ausnehmung 16 angebracht. Diese Ausnehmung weist ebenfalls eine zylindrische Fläche auf.

Nachdem die Rolle 6 in die Öffnung 5 eingesetzt ist, wird am aussenseitigen Randbereich 17 der Öffnung 5 im Bereich der Seitenflächen 7 und 9, die parallel zur Achse 15 der Rolle 6 verlaufen, das Material des Rollenkäfigs 4 plastisch verformt. Dies erfolgt durch Eindrücken eines rechteckförmigen Stempels in das Material des Rollenkäfigs 4, derart, dass ein vorstehender Rand 18 gebildet wird, der über die Oberfläche der Seitenflächen 7 und 9 vorsteht. In den Fig. 3 und 4 ist lediglich die eine Seite (Seitenfläche 7) derart verformt dargestellt. Durch diesen vorstehenden Rand 18 wird die Rolle 6 in der Öffnung 5 gehalten.

Wie aus Fig. 5 ersichtlich ist, weist die Rolle 6 einen tonnenförmigen Körper auf. Das bedeutet, dass sich der Abstützbereich, der sich auf der Führungssäule 1 und auf der Platte 2 abstützt, im mittleren Bereich der Rolle 6 liegt. Durch die weiteren Ausnehmungen 16, die bewirken, dass der vorstehende Rand 18 in diesem mittleren Bereich auch zurückversetzt ist, kommt die Rolle 6 mit ihrem Abstützbereich nicht in Kontakt mit den vorstehenden Rändern 18 und den beiden Seitenflächen 7 und 9. Da sich die kragenförmigen Vorsprünge 13 in den Eckbereichen der Öffnung 5 befinden, kommen auch diese nicht in Kontakt mit der Abstützfläche der Rolle 6. Dadurch wird erreicht, dass der Abstützbereich der Rolle 6 vom Rollenkäfig 4 frei ist und dadurch keinem zusätzlichen Verschleiss durch abrasive Reibung ausgesetzt ist.

Im Rollenkäfig 4 werden die Öffnungen 5 durch Vorbohren eines Loches und daran anschliessenden Ausfräsen der Kontur, wie sie vorgängig beschrieben worden ist, mittels eines einzigen Fräswerkzeuges durch eine Hochgeschwindigkeitsfräsmaschine angebracht. Dieses Ausfräsen der Öffnungen 5 im Rollenkäfig 4 kann mit sehr hoher Genauigkeit erfolgen, wodurch das Spiel der Rolle 6 in der Öffnung 5 gering gehalten werden kann. Dadurch wird eine genaue Führung der Rolle 6 erreicht, was sich ebenfalls positiv auf die geringe Abnützung der Rolle auswirkt. Durch das Ausfräsen wird eine geringe Oberflächenrauigkeit erhalten, wodurch die abrasive Reibung zwischen Rolle und Seitenwänden reduziert werden kann.

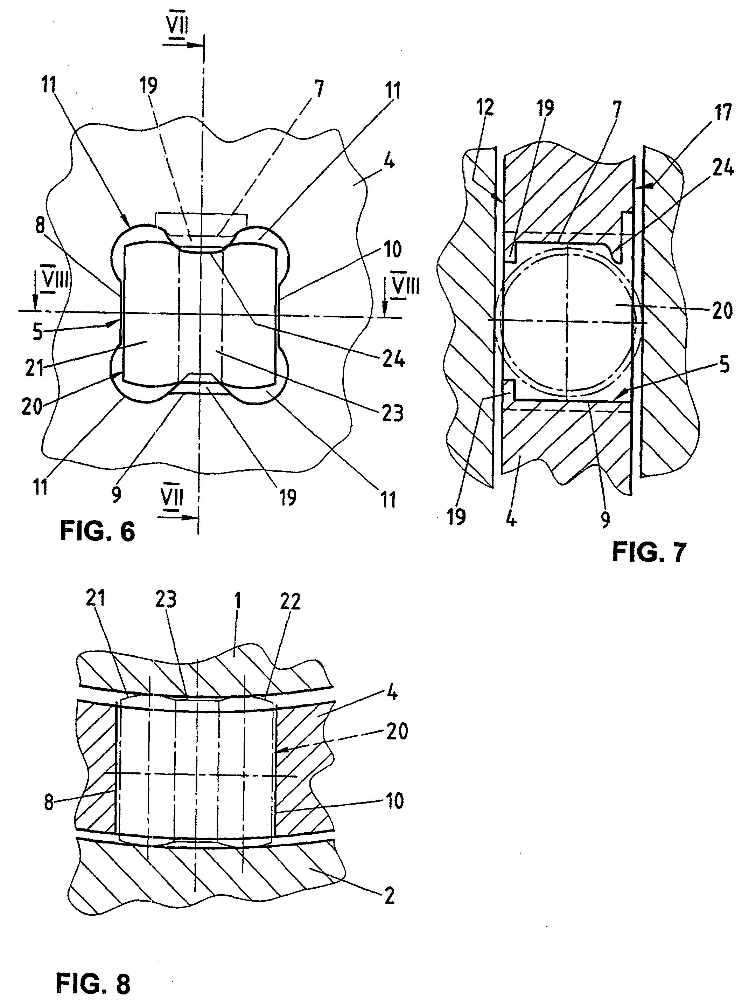

Das zweite Ausführungsbeispiel, wie es in den Fig. 6 bis 8 dargestellt ist, zeigt eine Öffnung 5, wie sie im Rollenkäfig 4 angebracht sein können, welche ebenfalls in den Eckbereichen der Seitenflächen 7 bis 10 mit einer Ausnehmung 11 versehen ist. Diese Ausnehmungen 11 haben ebenfalls die Form eines Halbzylinders. Die kragenförmigen Vorsprünge 19, die am innenseitigen Randbereich 12 der Öffnung 5 angebracht sind, verlaufen entlang der beiden Seitenflächen 7 und 9 und sind seitlich durch die Ausnehmungen 11 begrenzt. Die in die so ausgestaltete Öffnung 5 eingesetzte Rolle 20 weist zwei bombierte Oberflächen 21 und 22 auf, welche jeweils den seitlichen Bereich der Rolle 20 bilden. Der mittlere Bereich 23 ist hinsichtlich dieser bombierten Oberflächen 21 und 22 über den gesamten Umfang der Rolle 20 zurückversetzt.

Wie insbesondere aus der Fig. 8 ersichtlich ist, bilden bei dieser Rolle 20 die bombierten Oberflächen 21 und 22 die Abstützbereiche, mittels welchen sich diese Rolle 20 auf der Führungssäule 1 und der Platte 2 abstützt. Durch die Ausnehmungen 11 und den an den Seitenflächen 7 und 9 zwischen den Ausnehmungen 11 angebrachten kragenförmigen Vorsprüngen 19 ist gewährleistet, dass die Abstützbereiche der Rolle 20 nie in Kontakt kommen mit dem Rollenkäfig 4.

Nachdem die Rolle 20 in die Öffnung 5 eingesetzt ist, wird am aussenseitigen Randbereich 17 der Öffnung 5 entlang den Seitenflächen 7 und 9 zwischen den Ausnehmungen 11 das Material des Rollenkäfigs 4 eingedrückt und plastisch verformt, in gleicher Weise, wie dies zum vorhergehenden Ausführungsbeispiel beschrieben worden ist. Dadurch wird ein über die Oberfläche der Seitenflächen 7 und 9 vorstehender Rand 24 gebildet. Dieser vorstehende Rand 24 ist seitlich durch die Ausnehmungen 11 begrenzt, wodurch auch dieser vorstehende Rand 24 mit der Rolle 20 in deren mittleren Bereich 23 und nicht mit dem Abstützbereich in Kontakt kommt. Die plastische Verformung des Materials des Rollenkäfigs 4 zur Bildung des vorstehenden Randes 24 wird mit einem im wesentlichen rechteckförmigen Stempel ausgeführt, wie dies in Fig. 6 und 7 ersichtlich ist, wobei lediglich eine Seite mit dem verformten Zustand dargestellt ist.

Auch diese Öffnungen 5 werden durch Vorbohren und daran anschliessendem Ausfräsen der gewünschten Kontur im Rollenkäfig 4 angebracht. Das Ausfräsen erfolgt ebenfalls in einer Hochgeschwindigkeitsfräsmaschine, wobei dies mit einem Fräswerkzeug ausgeführt werden kann. Auch hier werden die Vorteile erreicht, wie sie beim vorherigen Ausführungsbeispiel beschrieben worden sind, die sich insbesondere aus der grossen Genauigkeit und der geringen Oberflächenrauigkeit ergeben, wobei auch hier das Spiel der Rolle gering gehalten werden kann und somit eine genaue Lage der Rolle gewährleistet ist. Dies alles dient dazu, die Lebensdauer von entsprechend eingesetzten Längsführungen zu verbessern.

## Patentansprüche

1. Rollenkäfig (4) für eine wälzgelagerte Längsführung (3) mit in darin angebrachten, im wesentlichen durchgehenden Öffnungen (5) eingesetzten Rollen (6; 20) zum Längsführen von einem führenden Teil (1) in einem geführten Teil (2), insbesondere von Führungssäulen in Bohrungen von Stanzwerkzeugen, Werkzeugen für den Formenbau oder im allgemeinen Maschinenbau, in welchem die Öffnungen (5), die spanabhebend bearbeitet sind, einen im wesentlichen rechteckförmigen Querschnitt aufweisen, gebildet durch vier Seitenflächen (7, 8, 9, 10), und der aussenseitige Randbereich (17) jeder Öffnung (5) entlang mindestens eines Teils von zwei Seitenflächen (7, 9), welche parallel zur Längsachse (15) der Rolle (6) verlaufen, durch Eindrücken plastisch verformt ist, derart, dass ein über die Oberfläche der Seitenflächen (7, 9) der Öffnung (5) vorstehender Rand (18; 24) gebildet ist, **dadurch gekennzeichnet, dass** der innenseitige Randbereich (12) jeder Öffnung (5) kragenförmige Vorsprünge (13; 19) aufweist, welche aus den Seitenflächen (7, 8, 9, 10) vorstehen und welche sich über einen Teil des Umfangs der Öffnung (5) erstrecken, und dass die vier Eckbereiche der durch die vier Seitenflächen (7, 8, 9, 10) gebildeten Öffnung (5) jeweils mit einer Ausnehmung (11) versehen sind, welche im wesentlichen in der Form eines Halbzylinders ausgebildet sind.

2. Rollenkäfig nach Anspruch 1, **dadurch gekennzeichnet, dass** der am aussenseitigen Randbereich (17) entlang der beiden Seiten (7, 9) verlaufende vorstehende Rand (18; 24) jeweils seitlich durch die beiden Ausnehmungen (11) begrenzt ist.

3. Rollenkäfig nach Anspruch 1 oder 2, **dadurch gekennzeichnet, dass** die kragenförmigen Vorsprünge (19) bei Verwendung von Rollen (20), die mit zwei bombierten Oberflächen (21, 22) versehen sind, die jeweils einen seitlichen Bereich der Rolle (20) bilden, während der mittlere Bereich (23) über den gesamten Umfang zurückversetzt ist, entlang der beiden Seiten vorgesehen sind, welche parallel zur Längsachse (15) der Rolle (20) verlaufen, und dass sie seitlich durch die im jeweiligen Eckbereich angebrachte Ausnehmung (11) begrenzt sind.

4. Rollenkäfig nach Anspruch 1 oder 2, **dadurch gekennzeichnet, dass** die kragenförmigen Vorsprünge (13) im Bereich der Ausnehmungen (11) vorgesehen sind, wobei deren Vorderkanten (14) im wesentlichen in diagonaler Richtung über den Eckbereich verlaufen.

5. Rollenkäfig nach Anspruch 4, **dadurch gekennzeichnet, dass** bei Verwendung von Rollen (6), die eine bombierte Oberfläche haben, etwa im mittleren Bereich der beiden Seiten, welche parallel zur Längsachse (15) der Rolle (6) verlaufen, in der entsprechenden Seitenfläche (7, 9) jeweils eine weitere Ausnehmung (16) angebracht ist.

6. Rollenkäfig nach einem der Ansprüche 1 bis 5, **dadurch gekennzeichnet, dass** jede einzelne Öffnung (5) im Rollenkäfig (4) durch einen Fräsvorgang in die endgültige Form gebracht ist.

## Claims

1. Roller cage (4) for a longitudinal guiding device (3), mounted on rolling bearings, with substantially continuous apertures (5) made therein in which rollers (6; 20) are inserted for longitudinal leading of a guiding part (1) in a guided part (2), in particular of guide pillars in bores of punching dies, tools for mould making or in general machine construction, wherein the apertures (5), which are machined down, have a substantially rectangular cross-section, formed by four side faces (7, 8, 9, 10), and the outside edge region (17) of each aperture (5) is plastically deformed through pressing in along at least one part of two side faces (7, 9) which run parallel to the longitudinal axis (15) of the roller (6), such that an edge (18; 24) is formed protruding over the surface of the side faces (7, 9) of the aperture (5), **characterised in that** the inside edge region (12) of each aperture (5) has collar-shaped projections (13; 19), which protrude out of the side faces (7, 8, 9, 10) and which extend over a part of the circumference of the aperture (5), and **in that** the four comer regions of the aperture (5) formed by the four side faces (7, 8, 9, 10) are each provided with a recess (11), which recesses are shaped substantially in the form of a half cylinder.

2. Roller cage according to claim 1, **characterised in that** the protruding edge (18; 24) running along the two side faces (7, 9) in the outer edge region (17) is limited in each case laterally by the two recesses (11).

3. Roller cage according to claim 1 or 2, **characterised in that**, in using rollers (20) that are provided with two cambered surfaces (21, 22) which each form a lateral region of the roller (20) whereas the central region (23) is set back over the entire circumference, the collar-shaped projections (19) are provided along the two sides which run parallel to the longitudinal axis (15) of the roller (20), and **in that** they are limited laterally by the recess (11) provided in each comer region.

4. Roller cage according to claim 1 or 2, **characterised in that** the collar-shaped projections (13) are provided in the region of the recesses (11), their front edges (14) running substantially in diagonal direction over the edge region.

5. Roller cage according to claim 4, **characterised in that**, in using rollers (6) that have a cambered surface, there is provided approximately in the central region of the two sides which run parallel to the longitudinal axis (15) of the roller (6), in the respective side face (7, 9), one further recess (16) each.

6. Roller cage according to one of the claims 1 to 5, **characterised in that** each individual aperture (5) in the roller cage (4) is put into the final form through a milling step.

## Revendications

1. Cage à rouleaux (4) destinée à un guidage longitudinal (3) à contact roulant, avec rouleaux (6, 20) mis en place dans des ouvertures (5) sensiblement traversantes qui y ont été pratiquées, destinée au guidage longitudinal d'une pièce guide (1) dans une pièce guidée (2), en particulier de colonnes de guidage dans des trous d'outils pour estampage à froid, d'outils destiné à la fabrication de moules ou en construction mécanique générale, cage à rouleaux dans laquelle les ouvertures (5), qui sont usinées avec enlèvement de matière, présentent une section sensiblement rectangulaire formée par quatre surfaces latérales (7, 8, 9, 10) et la zone marginale extérieure (17) de chaque ouverture (5) est déformée plastiquement par estampage à froid, le long d'au moins une partie de deux surfaces latérales (7, 9) parallèles à l'axe longitudinal (15) du rouleau (6), de telle façon qu'il se forme un bord (18, 24) qui dépasse de la surface des surfaces latérales (7, 9) de l'ouverture (5), **caractérisée en ce que** la partie marginale intérieure (12) de chaque ouverture (5) présente des saillies en arc de cercle (13, 19) qui dépassent des surfaces latérales (7, 8, 9, 10) et s'étendent sur une partie de la circonférence de l'ouverture (5), et **en ce que** les quatre zones d'angles de l'ouverture (5) formée par les quatre surfaces latérales (7, 8, 9, 10) présentent chacune une échancrure (11) ayant sensiblement la forme d'un demi-cylindre.

2. Cage à rouleaux selon la première revendication, **caractérisée en ce que** le bord (18, 24) qui se trouve dans la zone marginale extérieure (17) le long des deux surfaces latérales (7, 9) est limité latéralement, dans chaque cas, par les eux échancrures (11).

3. Cage à rouleaux selon la revendication 1 ou 2, **caractérisée en ce que**, dans le cas où l'on utilise des rouleaux (20) présentant deux surfaces bombées (21, 22) dont chacune constitue une partie latérale du rouleau (20) tandis que la partie médiane (23) est en retrait sur tout le périmètre, les saillies en arc de cercle (19) se trouvent le long des deux faces qui sont parallèles à l'axe longitudinal (15) du rouleau (20), et **en ce qu'**elles sont limitées latéralement par l'échancrure 11 pratiquée dans la zone d'angle considérée.

4. Cage à rouleaux selon la revendication 1 ou 2, **caractérisée en ce que** les saillies en arc de cercle (13) se trouvent près des échancrures (11), leurs arêtes avant (14) étant sensiblement en diagonale dans la zone d'angle.

5. Cage à rouleaux selon la revendication 4, **caractérisée en ce que**, dans le cas où l'on utilise des rouleaux (6) dont la surface est bombée, par exemple dans la partie médiane des deux faces parallèles à l'axe longitudinal (15) du rouleau (6), une échancrure supplémentaire (16) est pratiquée dans chacune des surfaces latérales correspondantes (7, 9).

6. Cage à rouleaux selon l'une des revendications 1 à 5, **caractérisée en ce que** la forme définitive de chacune des ouvertures (5) pratiquées dans la cage à rouleaux (4) lui est donnée par une opération de fraisage.
